(19) Europäisches Patentamt
European Patent Office
Office européen des brevets

(11) **EP 3 694 641 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(21) Anmeldenummer: **18782975.9**

(22) Anmeldetag: **04.10.2018**

(51) Int Cl.:
*B01J 20/04* (2006.01)　　*B27N 1/00* (2006.01)
*B01J 20/14* (2006.01)　　*B27N 3/02* (2006.01)
*B27N 1/02* (2006.01)　　*B01J 20/20* (2006.01)
*B01J 20/18* (2006.01)　　*B01J 20/12* (2006.01)

(86) Internationale Anmeldenummer:
**PCT/EP2018/077064**

(87) Internationale Veröffentlichungsnummer:
**WO 2019/072689 (18.04.2019 Gazette 2019/16)**

(54) **PORÖSES TRÄGERSYSTEM ZUR REDUKTION DER FORMALDEHYDEMISSION IN EINEM HOLZWERKSTOFF**

POROUS CARRIER SYSTEM FOR REDUCING THE EMISSION OF FORMALDEHYDE IN A WOOD MATERIAL

SYSTÈME DE SUPPORT POREUX DESTINÉ À RÉDUIRE L'ÉMISSION DE FORMALDÉHYDE DANS UN MATÉRIAU DÉRIVÉ DU BOIS

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **10.10.2017 DE 102017010363**

(43) Veröffentlichungstag der Anmeldung:
**19.08.2020 Patentblatt 2020/34**

(73) Patentinhaber: **Fritz Egger GmbH & Co. OG 6380 St. Johann in Tirol (AT)**

(72) Erfinder:
• KAISERGRUBER, Theresa
3150 Wilhelmsburg (AT)
• MITTER, Roland
3123 Großrust (AT)

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**DE-A1-102007 038 041　DE-U1- 20 313 424**

• **MONIKA FUNK ET AL: "Diatomaceous earth as an inorganic additive to reduce formaldehyde emissions from particleboards", WOOD MATERIAL SCIENCE & ENGINEERING, 22. Juni 2015 (2015-06-22), Seiten 1-6, XP055529712, United Kingdom ISSN: 1748-0272, DOI: 10.1080/17480272.2015.1040066 in der Anmeldung erwähnt**

**Beschreibung**

Die vorliegende Erfindung betrifft ein poröses Trägersystem zur Reduktion der Formaldehydemission in einem Holzwerkstoff, ein Verfahren zur Herstellung des porösen Trägersystems, die Verwendung des porösen Trägersystems zur Reduktion der Formaldehydemission in einem Holzwerkstoff, einen Holzwerkstoff, umfassend das poröse Trägersystem sowie ein Verfahren zur Herstellung desselben.

Werkstoffe auf Span- oder Faserbasis, sogenannte Holzwerkstoffe, bestehen aus zerkleinertem Holzmaterial, das sowohl zu Ein- als auch zu Mehrschichtplatten verpresst werden kann. Die Klassifizierung von Holzspanwerkstoffen erfolgt üblicherweise nach EN 309. Wichtige Klassifizierungsmerkmale sind das Herstellungsverfahren (stranggepresst oder flachgepresst), die Oberflächenbeschaffenheit (roh, geschliffen, pressbeschichtet), die Form und Größe der eingesetzten Holzmaterialien (Holzspäne, Holzflakes, Holzwafer, Holzstrands), der Plattenaufbau (einschichtig oder mehrschichtig) und der Verwendungszweck. Die Klassifizierung von Holzfaserwerkstoffen erfolgt üblicherweise nach EN 316. Wichtige Klassifizierungsmerkmale sind das Herstellungsverfahren (Nass- oder Trockenverfahren), die Rohdichte (hart (HB), mittelhart (MB), porös (SB)), Anwendungsbedingungen (Trocken-, Feucht- oder Außenbereich) oder Verwendungszweck.

Da in Holzwerkstoffen der massive Holzverbund größtenteils aufgehoben ist, haben diese Platten in Richtung der Plattenebene, also in Richtung der Länge und Breite der Platte, nahezu die gleichen Quell- und Schwindeigenschaften. Holzwerkstoffe finden beispielsweise im Baugewerbe als isolierendes, konstruktives oder verkleidendes Element, in der Möbelindustrie sowie als Bodenbelag Verwendung.

Bei der Herstellung von Holzwerkstoffen, insbesondere bei der Herstellung von Holzspanwerkstoffen, kann eine hohe stoffliche Verwertung des Holzes sichergestellt werden. So findet neben Waldholz auch Restholz aus der Industrie und Gebrauchtholz seinen Einsatz.

Holzwerkstoffe werden aus feinteiligem Holzmaterial verschiedenster Holzarten unter Hinzufügung natürlicher und/oder synthetischer Bindemittel sowie weiterer Stoffe hergestellt. Zur Aufbereitung des Holzmaterials werden schneidende oder mahlende Verfahren eingesetzt, um Holzpartikel zu gewinnen. Beispiele für Holzpartikel sind, Holzflakes, Holzstrands, Holzwafer, Holzspäne und Holzfasern. Anschließend werden die Holzpartikel üblicherweise getrocknet, mit einer Zusammensetzung (Leimflotte), die ein Bindemittel enthält, beleimt und in einer oder unterschiedlichen Schichten angeordnet (Streuung). Schließlich wird das gestreute Holzmaterial unter Druck und Temperatureinwirkung zu dem jeweils gewünschten Holzwerkstoff verpresst.

Bindemittel für die Herstellung von Holzwerkstoffen können einen oder mehrere Bestandteile aufweisen. Üblicherweise bestehen oder enthalten Bindemittel zur Herstellung von Holzwerkstoffen Kunstharze.

Kunstharze sind dem Fachmann grundsätzlich bekannt. Kunstharze sind beispielsweise in Römpps Chemie-Lexikon, 7. Auflage, Frankh'sche Verlagshandlung Stuttgart, 1973, Seite 1893 beschrieben. Eine wichtige Gruppe der Kunstharze stellen Kondensatharze dar. Diese erhärten durch Kondensationsreaktionen, bei denen oft Wasser abgespalten wird. Zu den Kondensatharzen zählen zum Beispiel Phenolformaldehydharze und Aminoplastharze.

Aminoplastharze haben sich als besonders praxisgerecht im Zusammenhang mit der Herstellung von Holzwerkstoffen erwiesen. Üblicherweise enthält ein Holzwerkstoff mindestens ein Aminoplastharz als Bindemittel. Aminoplastharze werden in Holzwerkstoffen normalerweise dazu verwendet, die lignocellulosehaltigen Teile oder Holzpartikel miteinander zu verbinden. Dabei kann ein einzelnes Aminoplastharz oder eine Mischung verschiedener Aminoplastharze verwendet werden.

Aminoplastharze sind dem Fachmann bekannt und z.B. in "Ullmanns Enzyklopädie der technischen Chemie", 4. Auflage, Band 7, S. 403ff. beschrieben. Aminoplastharze können durch Kondensation einer Amino-, Imino oder Amidgruppen enthaltenden Komponente mit einer Carbonylverbindung erhalten werden. Häufige Ausgangsmaterialien für Aminoplastharze sind beispielsweise Harnstoff und/oder Melamin (als Aminogruppen enthaltende Komponente) und Formaldehyd (als Carbonylverbindung). In letzterem Fall wird die Aminogruppen enthaltende Komponente zumeist in einem ersten Schritt mit der Carbonylverbindung bis zu einem bestimmten Grad vorkondensiert. Je nachdem ob im ersten Schritt z.B. nur Melamin oder nur Harnstoff als Aminogruppen enthaltende Komponente eingesetzt wird, erhält man ein sogenanntes Melaminharz oder ein Harnstoffharz. Derartige Melamin- und/oder Harnstoffharze können insbesondere die Hauptbestandteile von Aminoplastharzen bilden. In einem zweiten Schritt, oft auch als Aushärtung bezeichnet, kann das Aminoplastharz dann durchgehend vernetzt werden. Harze, die vorwiegend aus Harnstoff und Formaldehyd gebildet werden, bezeichnet man auch als Harnstoffformaldehydharze (UF-Harze). Harze, die vorwiegend aus Melamin und Formaldehyd gebildet werden, bezeichnet man als Melaminformaldehydharze (MF-Harze). Mischkondensate aus Harnstoff, Melamin und Formaldehyd werden gemeinhin als Melamin-Harnstoff-Formaldehyd-Harze (MUF-Harze) bezeichnet.

Wenn hier oder an anderer Stelle von Aminoplastharzen die Rede ist, dann sind damit auch Aminoplastharzzusammensetzungen gemeint. Aminoplastharze und/oder Aminoplastharzzusammensetzungen können auch Wasser enthalten. In der Regel enthalten Aminoplastharze und/oder Aminoplastharzzusammensetzungen Wasser.

Die Aushärtung von Kunstharzen, insbesondere von Aminoplastharzen, kann zum Beispiel durch Zusatz saurer Katalysatoren erfolgen. Dabei kommen üblicherweise konventionelle Härter in Betracht. Beispiele für konventionelle Härter sind starke organische Säuren, anorganische Säuren, wie Schwefelsäure und Phosphorsäure, Salze, die in Wasser sauer reagieren, wie Aluminiumchlorid und Aluminiumnitrat (auch als saure Salze bezeichnet), Salze, die durch Reaktion mit Komponenten des Kunstharzes, vorzugsweise mit Formaldehyd, eine Säure generieren (auch als Säure generierende Salze bezeichnet) wie Ammoniumphosphat, Ammoniumnitrat, Ammoniumsulfat und Ammoniumchlorid, und Mischungen der vorgenannten Substanzen.

Nachteilig an den als Härter verwendeten Säuren ist, dass diese verstärkt zur unerwünschten Hydrolyse der Leimfuge beitragen, was nicht nur zu einer Emission von Formaldehyd in die Umgebung führt, sondern sich auch negativ auf die Festigkeit und die Quellungseigenschaften des Holzwerkstoffs auswirken kann. Gleiches gilt für den Einsatz von sauren Salzen. Oftmals müssen zusätzliche Puffersysteme zur Verringerung dieser Nachteile eingesetzt werden, was aber wiederrum zu einer ungenügenden Härtung des Harzes und einer damit verbundenen geringeren Festigkeit und höherer Quellungsneigung führen kann.

Ein weiterer Nachteil der Säure generierenden Salze besteht darin, dass diese Salze üblicherweise freien Formaldehyd benötigen, um die entsprechende starke Säure zu bilden, die dann zur Aushärtung des Harzes beiträgt. Insofern benötigen Bindemittelzusammensetzungen (Leimflotten), die Härtersysteme auf Basis von Säure generierenden Salzen enthalten, einen erhöhten Formaldehydanteil. Dieser Formaldehyd ist normalerweise nicht dauerhaft gebunden und es kann nach Beendigung des Herstellungsverfahrens zu dessen langsamer Freisetzung kommen.

Formaldehyd kann bei menschlicher oder tierischer Exposition gesundheitsschädlich sein und zu Allergien, Haut-, Atemwegs- oder Augenreizungen führen. Bei starker und chronischer Exposition kann es sogar karzinogen wirken. Daher ist es erstrebenswert, die Formaldehydemission eines Holzwerkstoffs zu minimieren. Dies ist insbesondere im Hinblick auf die Verwendung von Holzwerkstoffen zur Herstellung von Möbelstücken oder als Bodenbelag wichtig.

Um die Formaldehydemission in Holzwerkstoffen zu reduzieren wurden im Stand der Technik bereits unterschiedliche Methoden vorgeschlagen. So ist es beispielsweise bekannt, das Molverhältnis von Formaldehyd zu der Aminogruppen-haltigen Komponente, wie Harnstoff oder Melamin, in Bindemittelzusammensetzungen abzusenken. Hierdurch ist aber nur bedingte eine Reduktion der Formaldehydemission erreichbar, da sich gleichzeitig die Festigkeitseigenschaften sowie das Quellverhalten der so erhaltenen Holzwerkstoffe verschlechtern.

Auch ist bereits vorgeschlagen worden, der Bindemittelzusammensetzung oder den mit der Bindemittelzusammensetzung beleimten Holzpartikeln bei der Holzwerkstoffherstellung zusätzlich Stoffe hinzuzufügen, die in der Lage sind Formaldehyd zu binden. Solche auch "Formaldehydfänger" genannte Stoffe sind Substanzen mit freien Aminogruppen, wie z.B. Melamin oder Harnstoff. Durch die Zugabe solcher Substanzen zur Bindemittelzusammensetzung oder zu den mit der Bindemittelzusammensetzung beleimten Holzspänen reagiert ein Teil des Formaldehyds direkt mit diesen Substanzen, womit sich das molare Verhältnis von Formaldehyd zu bereits in der Bindemittelzusammensetzung enthaltener Aminogruppen-haltiger Komponente, wie z.B. Melamin oder Harnstoff, weiter reduziert.

Dies führt aber auch zu einer Verringerung der Reaktivität der Bindemittelzusammensetzung, d.h. einer verlangsamten Aushärtung und damit verbunden zur Erhöhung der Presszeiten bei der Herstellung der Holzwerkstoffe. Ferner weisen die so hergestellten Holzwerkstoffe deutlich schlechtere Festigkeits- und Quellungseigenschaften auf.

Die DE 1653 167 A1 beschreibt ein Verfahren zur Herstellung von Spanplatten, wobei den Holzspänen nach dem Beleimen feinteilige Stoffe beigemengt werden, die Formaldehyd chemisch binden. Bei diesen feinteiligen Stoffen handelt es sich um mit einer wässrigen Lösung von Harnstoff, Melamin oder Phenolen imprägnierte Holzspäne oder Holzstaub.

Die EP 0 341 569 A2 beschreibt ein Verfahren zur Herstellung von Verbundwerkstoffen mit verringerter Formaldehyd-Emission unter Verwendung eines Formaldehydfängers. Der Formaldehydfänger liegt in pulverförmiger oder geprillter Form vor und ist jeweils mit einem wasserbeständigen und/oder wasserundurchlässigen Überzug versehen. Der Überzug hat zur Folge, dass sich die Formaldehydfänger-Partikel erst in der Endphase des Aushärtungsprozesses auflösen, ohne dass das Molverhältnis von Formaldehyd zu Aminogruppen enthaltender Komponente des Harzes, wie z.B. Melamin oder Harnstoff, während des Aushärtevorganges der Leimfuge ungünstig beeinflusst wird.

Funk, M. et al., Wood Material Science & Engineering, 2015, S. 1-6 beschreiben den Einsatz eines mit Harnstoff beladenen porösen Trägermaterials zur Reduktion der Formaldehydemission. Den Ergebnissen der in Funk et al. beschriebenen Querzugfestigkeitsmessungen ist nicht zu entnehmen, dass die Zugabe des mit Harnstoff beladenen porösen Trägermaterials gegenüber der Zugabe von reinem Harnstoff einen vorteilhaften Einfluss auf die Querzugfestigkeit hat.

Nachteilig an den vorgenannten Verfahren ist, dass die ausgehärtete Leimfuge aufgrund des für das Aushärten des Aminoplastharzes eingesetzten Härters sauer und damit nicht hydrolysestabil ist, so dass sowohl mit einer weiteren Emissionsquelle von Formaldehyd als auch mit einer Verschlechterung der Festigkeits- und Quellungseigenschaften des Verbundwerkstoffs im Vergleich zu einem Verbundwerkstoff mit neutraler Leimfuge zu rechnen ist.

Die DE 203 13 424 U1 beschreibt eine Holzfaserplatte mit geringer Formaldehydemission, wobei die Platte aus miteinander verleimten Holzspänen oder Holzfasern besteht, der Leim eine oder mehrere Anteile umfasst, die das Herz thermisch stabilisieren und die Platte eine Formaldehydemission von weniger als 0,1 ppm aufweist.

Die DE 10 2007 038041 A1 beschreibt ein Verfahren zur Herstellung von Holzwerkstoffen aus lignocellulosehaltigen Zerkleinerungsprodukten, wobei die Holzwerkstoffe eine verminderte Emission von flüchtigen organischen Verbindungen, Aldehyden, insbesondere Formaldehyden, aufweisen.

Ausgehend von dem vorstehend erläuterten Stand der Technik und dessen Nachteilen bestand eine Aufgabe der Erfindung darin, ein verbessertes poröses Trägersystem zur Reduktion der Formaldehydemission in Holzwerkstoffen bereitzustellen. Insbesondere bestand eine Aufgabe der Erfindung darin, ein poröses Trägersystem zur Reduktion der Formaldehydemission bereitzustellen, welches erlaubt, Holzwerkstoffe mit einem weiter reduzierten Formaldehydgehalt bei gleichzeitig, im Vergleich zu den aus dem Stand der Technik bekannten Systemen, erhaltenen oder verbesserten Festigkeits- und Quellungseigenschaften herzustellen ohne dass die Verarbeitungsgeschwindigkeit, z.B. die Presszeit, darunter leidet.

Diese Aufgabe wird erfindungsgemäß durch ein poröses Trägersystem gemäß Anspruch 1, ein Verfahren zu dessen Herstellung gemäß Anspruch 2 oder 3, die Verwendung des porösen Trägersystems gemäß Anspruch 9, einen Holzwerkstoff, umfassend das poröse Trägersystem, gemäß Anspruch 10 sowie ein Verfahren zur Herstellung des Holzwerkstoffs, umfassend das poröse Trägersystem, gemäß Anspruch 11 gelöst.

Vorteilhafte Ausführungsformen der Erfindung sind in den abhängigen Ansprüchen beschrieben und werden nachfolgend wie der allgemeine Erfindungsgedanke im Einzelnen erläutert.

Das erfindungsgemäße poröse Trägersystem zur Reduktion der Formaldehydemission eines Holzwerkstoffs umfasst eine Formaldehyd bindende Substanz A und eine Hydroxid freisetzende Substanz B, wobei Substanz A und Substanz B in mindestens einem porösen Trägermaterial A enthalten sind oder wobei Substanz A in mindestens einem porösen Trägermaterial A und Substanz B in mindestens einem porösen Trägermaterial B enthalten ist, wobei das poröse Trägermaterial A und B Kieselgur ist, die Substanz A Harnstoff ist und die Substanz B Natriumsulfit ist.

Überraschenderweise wurde in praktischen Versuchen festgestellt, dass ein poröses Trägersystem, das eine Kombination einer Formaldehyd bindenden Substanz A und einer Hydroxid freisetzenden Substanz B umfasst, wobei Substanz A und Substanz B in mindestens einem porösen Trägermaterial A enthalten sind oder wobei Substanz A in mindestens einem porösen Trägermaterial A und Substanz B in mindestens einem porösen Trägermaterial B enthalten ist, wobei das poröse Trägermaterial A und B Kieselgur ist, die Substanz A Harnstoff ist und die Substanz B Natriumsulfit ist, die oben aufgeführten, aus dem Stand der Technik bekannten Probleme weitestgehend vermeidet oder reduziert. Dies war insbesondere deshalb überraschend, da der Fachmann erwarten würde, dass jeweils sowohl die Zugabe einer Formaldehyd bindenden Substanz A als auch die Zugabe einer Hydroxid freisetzenden Substanz B dazu führen sollte, dass sich die Aushärtungsgeschwindigkeit und der Aushärtungsgrad der Bindemittelzusammensetzung bei der Herstellung eines Holzwerkstoffs verschlechtern und somit auch dessen Festigkeits- und Quellungseigenschaften in Mitleidenschaft gezogen werden würden.

Mit dem erfindungsgemäßen porösen Trägersystem kann, im Vergleich zu den aus dem Stand der Technik bekannten Systemen, die Formaldehydemission reduziert werden ohne die Festigkeits- und Quellungseigenschaften eines Holzwerkstoffs maßgeblich zu verschlechtern. Vielmehr tritt oftmals mit dem erfindungsgemäßen porösen Trägersystem sogar teilweise eine Verbesserung dieser Eigenschaften auf. Ohne an wissenschaftliche Theorien gebunden sein zu wollen, scheint dieser überraschende Effekt darauf zu beruhen, dass die Formaldehyd bindende Substanz A und die Hydroxid freisetzende Substanz B zunächst inaktiv an dem porösen Trägersystem adsorbiert sind und erst bei Freisetzen aus dem porösen Trägersystem reagieren. Das Freisetzen erfolgt offenbar verzögert, so dass die Substanzen A und B die Aushärtungsgeschwindigkeit sowie den Aushärtungsgrad der Bindemittelzusammensetzung bei der Herstellung des Holzwerkstoffs nicht negativ beeinflussen und erst später im Endprodukt ihre Wirkung entfalten. Durch die verzögerte Freisetzung der Hydroxid freisetzenden Substanz B kommt es erst nach erfolgter Aushärtung der Bindemittelzusammensetzung zu einer Neutralisation des sauren Härters und damit zu einer Neutralisation der Leimfuge. Dies führt vorteilhafterweise dazu, dass die Leimfuge weniger hydrolyseanfällig ist und somit eine zusätzliche Quelle der Formaldehydemission vermieden wird, ohne dass auf den Härtungsvorgang im Herstellungsverfahren Einfluss genommen wird. Ferner sorgt die verzögert freigesetzte Formaldehyd bindende Substanz A dafür, dass nach dem Aushärten nicht gebundener Formaldehyd abgefangen wird, so dass die Formaldehydemission des Holzwerkstoffs noch weiter verringert wird. Überraschenderweise führt das Zusammenwirken der Substanzen A und B des porösen Trägersystems in der Kombination teilweise zu einer Verstärkung der jeweiligen Effekte der einzelnen Substanzen.

Wenn hier oder an einer anderen Stelle von einem "Vergleich zu den aus dem Stand der Technik bekannten Systemen oder Materialien" die Rede ist, dann ist damit ein Vergleich zu aus dem Stand der Technik, insbesondere dem eingangs beschriebenen, bekannten porösen Trägermaterialien zur Reduktion der Formaldehydemission in einem Holzwerkstoff sowie zu den aus dem Stand der Technik bekannten reinen Formaldehyd bindenden oder Hydroxid freisetzenden Substanzen und deren Anwendung in einem Holzwerkstoff gemeint.

Ein "porösen Trägersystem" im Sinne der Erfindung ist ein System, das mindestens ein poröses Trägermaterial umfasst. Ein "poröses Trägermaterial", wie hier verwendet, ist ein Trägermaterial, welches Poren aufweist und für Flüssigkeit und Luft durchlässig ist. "Poren" sind Hohlräume im Gesamtvolumen des Trägermaterials.

Gemäß der Erfindung sind Substanz A und Substanz B in mindestens einem porösen Trägermaterial A enthalten. Der Grad der Beladung mit den beiden Substanzen A und B kann zwischen 1 und 75 Gew.-% bezogen auf die Gesamtmasse des trockenen beladenen porösen Trägermaterials A variieren. Vorzugsweise beträgt der Grad der Beladung mit der Substanz A 1 bis 70 Gew.-%, vorzugsweise 15 bis 50 Gew.-%, insbesondere20 bis 45 Gew.-% bezogen auf die Gesamtmasse des trockenen beladenen porösen Trägermaterials A und der Grad der Beladung mit der Substanz B 1 bis 70 Gew.-%, vorzugsweise 1 bis 50 Gew.-%, bevorzugt 5 bis 45 Gew.-%, insbesondere 5 bis 25 Gew.-%, besonders bevorzugt 10 bis 20 Gew.-% bezogen auf die Gesamtmasse des trockenen beladenen porösen Trägermaterials A. Es hat sich gezeigt, dass ein Beladungsgrad von 20 bis 45 Gew.-% mit Substanz A und von 10 bis 20 Gew.-% mit Substanz B bezogen auf die Gesamtmasse des trockenen beladenen porösen Trägermaterials A die optimale Balance zwischen verbesserter Reduktion der Formaldehydemission und möglichst geringen Herstellungskosten bietet.

Wenn hier oder an einer anderen Stelle davon die Rede ist, dass die Substanz A und/oder B "in mindestens einem porösen Trägermaterial enthalten ist" so bedeutet dies, dass die Substanz sich sowohl innerhalb der Poren des Trägermaterials als auch auf der Oberfläche des Trägermaterials befinden kann.

Wenn hier oder an einer anderen Stelle von "trockenem beladenem porösen Trägermaterial" die Rede ist, so ist damit ein beladenes poröses Trägermaterial gemeint, welches durch Gefriertrocknung bis zur Massenkonstanz getrocknet wurde.

Methoden zur Bestimmung des Beladungsgrads des porösen Trägermaterials mit der Substanz A und/oder B sind dem Fachmann allgemein bekannt. Der Beladungsgrad des porösen Trägermaterials mit der Substanz A und/oder B wird bevorzugt wie folgt bestimmt: Eine auf mind. 0,001g genau abgewogene Menge von ca. 3 bis 5g des zu untersuchenden trockenen beladenen porösen Trägermaterials wird auf einem Filterpapier mindestens 5 mal mit heißem Wasser gewaschen und anschließend in einem Porzellantiegel am Bunsenbrenner vorverascht. Anschließend wird der Porzellantiegel in einem Tiegelofen bei etwa 600°C etwa 1 bis 2 Stunden geglüht. Die abgekühlte Probe wird auf mind. 0,001g genau zurückverwogen.

Auch die Verhältnisse der beiden Substanzen A und B auf dem porösen Trägermaterial können variieren. So kann das poröse Trägermaterial A die Substanz A und die Substanz B in einem Verhältnis von 10:1 bis 1:10 enthalten. Bevorzugt wird das Trägermaterial mit einem Verhältnis der Substanz A zu Substanz B von 5:1 bis 1:1, besonders bevorzugt von 3:1 bis 1,5:1 beladen.

Wenn hier oder an einer anderen Stelle von "Substanz A" bzw. "Substanz B" die Rede ist, so ist damit auch eine Substanzmischung gemeint, d.h. die Formaldehyd bindende Substanz A bzw. die Hydroxid freisetzende Substanz B kann eine Mischung von zwei oder mehr Formaldehyd bindenden Substanzen A bzw. Hydroxid freisetzenden Substanzen B umfassen . Die Formaldehyd-bindende Substanz A und die Hydroxidbindende Substanz B können auch ein und dieselbe Substanz sein, wenn diese sowohl Formaldehyd binden als auch Hydroxid freisetzen kann.

Gemäß der Erfindung ist Substanz A in mindestens einem porösen Trägermaterial A und Substanz B in mindestens einem porösen Trägermaterial B enthalten. Ein solches poröses Trägersystem hat den Vorteil, dass die Verhältnisse der Substanzen A und B nicht bereits durch die Beladung vorgegeben sind und daher vom Verwender durch Mischen der beladenen Trägermaterialien A und B im entsprechenden Verhältnis flexibel angepasst werden können. Bevorzugt werden die Trägermaterialien A und B zur Herstellung eines erfindungsgemäßen porösen Trägersystems in einem Mischungsverhältnis von 10:1 bis 1:10 gemischt.

Der Grad der Beladung mit der Substanz A auf dem Trägermaterial A sowie der Substanz B auf dem Trägermaterial B kann jeweils unabhängig voneinander zwischen 1 und 70 Gew.-% bezogen auf die Gesamtmasse des porösen Trägermaterials A bzw. B variieren. Vorzugsweise beträgt der Grad der Beladung mit der Substanz A auf dem Trägermaterial A 15 bis 50 Gew.-%, insbesondere20 bis 45 Gew.-% bezogen auf die Gesamtmasse des porösen Trägermaterials A. Vorzugsweise beträgt der Grad der Beladung mit der Substanz B auf dem Trägermaterial B 1 bis 50 Gew.-%, bevorzugt 5 bis 45 Gew.-%, insbesondere 5 bis 25 Gew.-%, besonders bevorzugt 10 bis 20 Gew.-% bezogen auf die Gesamtmasse des porösen Trägermaterials B.

Geeignete poröse Trägermaterialien sind dem Fachmann grundsätzlich bekannt. Bevorzugt werden poröse Materialien, wie poröse Mineralien, poröse Keramiken, Holzspäne, Holzstaub oder modifizierte Aktivkohle eingesetzt.

Gemäß der Erfindung ist das poröse Trägermaterial A und B Kieselgur. Als poröses Trägermaterial sind weiterhin modifizierte oder unmodifizierte Kieselsäure, Bentonite und verwandten Schichtsilikate, Ton, Zeolithe, modifizierte Aktivkohle und Blähgraphit geeignet. Bei praktischen Versuchen hat sich Kieselgur als besonders geeignetes Trägermaterial herausgestellt. Dies ist insbesondere der Fall, da das Porenvolumen von Kieselgur etwa 40% beträgt und die Porenverteilung, die zwischen 0,1 und 0,001 mm liegt, zum einen eine einfache Beladung mit der Formaldehyd bindenden Substanz A und der Hydroxid freisetzenden Substanz B erlaubt und zum anderen noch genügend freies Porenvolumen für einen intensiven Gasaustausch von Wasser und Formaldehyd zur Verfügung steht, um eine ausreichende Formaldehyd bindende Wirkung zu gewährleisten.

Bei der vom erfindungsgemäßen Trägersystem umfassten Formaldehyd bindenden Substanz A handelt es sich um eine Substanz, die in der Lage ist Formaldehyd chemisch zu binden. Dies geschieht vorzugsweise durch chemische Reaktion des Formaldehyds mit der Substanz A.

Mit einer "chemischen Reaktion" ist das Aufspalten und/oder die Neubildung von kovalenten Bindungen der an der Reaktion beteiligten Komponenten verbunden. Dies ist in Abgrenzung zu einer "physikalischen Reaktion", die ausschließlich auf Wechselwirkungen zwischen den Komponenten beruht und nicht zu einem Aufspalten und/oder einer Neubildung kovalenter Bindungen der an der Reaktion beteiligten Komponenten führt, zu verstehen.

Geeignete Formaldehyd bindende Substanzen A sind beispielsweise Diazine, Triazine, Melamin, Urethane, Polyamine, Polyacrylsäureamide, Harnstoff, Guanidin, Hydroxylamin, Ethylendiamin, Anilin, Phenole, Resorcin, Dibutylthioharnstoff, Diphenylmethandiisocyanat, Dicyandiamid, Thioharnstoff, Sulfite, Ammoniumcarbonat, Carbamate mit freien Amidfunktionen und Mischungen davon.

Erfindungsgemäß ist die Formaldehyd bindende Substanz A Harnstoff. Als Formaldehyd bindende Substanz A sind weiterhin Ammoniumcarbonat, Carbamate mit freien Amidfunktionen, Sulfite sowie Mischungen davon geeignet. Als besonders praxisgerecht hat sich der Einsatz von Harnstoff als Formaldehyd bindende Substanz A erwiesen. Harnstoff ist ein günstige, leicht handhabbare Formaldehyd bindende Substanz, die aufgrund der guten Wasserlöslichkeit hohe Beladungsgrade des porösen Trägermaterials erlaubt. Harnstoff kristallisiert im porösen Trägermaterial in Form von Nadeln aus. Dies führt dazu, dass genug freies Porenvolumen für einen ausreichend guten Gasaustausch nach erfolgter Beladung in dem porösen Trägermaterial verbleibt.

Das erfindungsgemäße poröse Trägersystem umfasst ferner eine Hydroxid freisetzende Substanz B. Eine "Hydroxid freisetzende Substanz" ist eine Substanz, die in der Lage ist durch eine chemische Reaktion Hydroxid, d.h. OH⁻ Ionen, freizusetzen. Die Hydroxid freisetzende Substanz B kann beispielsweise durch Reaktion mit Wasser oder durch Reaktion mit Formaldehyd und Wasser Hydroxid freisetzen. Vorzugsweise setzt die Hydroxid freisetzende Substanz B durch Reaktion mit Formaldehyd und Wasser Hydroxid frei. Geeignete Hydroxid freisetzende Substanzen B sind beispielsweise die Salze der schwefligen Säure (Sulfite), Carbonate oder Hydroxide.

Erfindungsgemäß ist die Hydroxid freisetzende Substanz B Natriumsulfit. Als Hydroxid freisetzende Substanz B sind weiterhin Natriumcarbonat, Ammoniumcarbonat, Kaliumcarbonat und Natriumhydroxid geeignet. Natriumsulfit kann durch Reaktion mit Formaldehyd und Wasser sowohl Hydroxid freisetzen als auch Formaldehyd binden.

Die Erfindung betrifft ferner ein Verfahren zur Herstellung eines porösen Trägersystems zur Reduktion der Formaldehydemission eines Holzwerkstoffs, wobei Substanz A und Substanz B in mindestens einem porösen Trägermaterial A enthalten sind, das die folgenden Schritte umfasst:

a1) Aufbringen einer flüssigen Zusammensetzung, die eine Substanz A und eine Substanz B umfasst, auf ein poröses Trägermaterial A;

b1) Zumindest teilweises Entfernen der flüssigen Zusammensetzung von dem porösen Trägermaterial oder

a2) Aufbringen einer ersten flüssigen Zusammensetzung, die die Substanz A umfasst auf mindestens ein poröses Trägermaterial A,

b2) Zumindest teilweises Entfernen der ersten flüssigen Zusammensetzung von dem mindestens einen porösen Trägermaterial A,

c2) Aufbringen einer zweiten flüssigen Zusammensetzung, die die Substanz B umfasst auf das mindestens eine poröse Trägermaterial A,

d2) Zumindest teilweises Entfernen der zweiten flüssigen Zusammensetzung von dem mindestens einen porösen Trägermaterial A.

Solch ein Verfahren dient der Herstellung eines porösen Trägermaterials, bei dem Substanz A und Substanz B in dem gleichen mindestens einen porösen Trägermaterial A enthalten sind.

Ein weiterer Gegenstand der Erfindung ist ein Verfahren zur Herstellung eines porösen Trägersystems zur Reduktion der Formaldehydemission eines Holzwerkstoffs, wobei Substanz A in mindestens einem porösen Trägermaterial A und Substanz B in mindestens einem porösen Trägermaterial B enthalten ist, das die folgenden Schritte umfasst:

a3) Aufbringen einer flüssigen Zusammensetzung, die eine Substanz A umfasst, auf mindestens ein poröses Trägermaterial A,

b3) Aufbringen einer flüssigen Zusammensetzung, die die Substanz B umfasst, auf mindestens ein poröses Trägermaterial B,

c3) Zumindest teilweises Entfernen der flüssigen Zusammensetzungen von den porösen Trägermaterialien A und B,

d3) Mischen der erhaltenen porösen Trägermaterialien A und B.

Dieses Verfahren dient der Herstellung eines porösen Trägermaterials, bei dem die Substanzen A und B in unterschiedlichen porösen Trägermaterialien enthalten sind.

Dabei gilt für die Merkmale der beiden Verfahren das oben zu den Merkmalen des erfindungsgemäßen porösen Trägersystems oder seinen Ausführungsformen Ausgeführte und das nachfolgend zu den Merkmalen der Verfahren zur Herstellung des porösen Trägersystems oder deren Ausführungsformen Ausgeführte entsprechend.

Unter einer "flüssigen Zusammensetzung" wird vorliegend eine Zusammensetzung verstanden, die vollständig oder teilweise flüssig ist. Eine "flüssige Zusammensetzung" kann auch eine Suspension, Emulsion oder Schmelze sein. Gemäß einer Ausführungsform der Erfindung ist die flüssige Zusammensetzung eine Zusammensetzung in der die Substanz A und/oder B gelöst vorliegen. Bevorzugt handelt es sich bei der flüssigen Zusammensetzung um eine Lösung.

Wenn hier von "Aufbringen einer flüssigen Zusammensetzung auf ein poröses Trägermaterial" die Rede ist, dann ist damit das vollständige oder teilweise In-Kontakt-Bringen des porösen Trägermaterials mit dieser flüssigen Zusammensetzung gemeint. Grundsätzlich sind dem Fachmann verschiedene Methoden bekannt, um flüssigen Zusammensetzungen auf Trägermaterialien aufzubringen. Gemäß einer Ausführungsform der Erfindung ist das Aufbringen der flüssigen Zusammensetzung ausgewählt aus Eintauchen des porösen Trägermaterials in die flüssige Zusammensetzung, Fluten des porösen Trägermaterials mit der flüssigen Zusammensetzung oder Aufsprühen der flüssigen Zusammensetzung auf das poröse Trägermaterial. Unter "Fluten" des porösen Trägermaterials wird das Bedecken des porösen Trägermaterials mit der flüssigen Zusammensetzung verstanden.

Es hat sich als besonders praxisgerecht erwiesen, wenn das Aufbringen der flüssigen Zusammensetzung durch Eintauchen des porösen Trägermaterials in die flüssige Zusammensetzung oder Fluten des porösen Trägermaterials mit der flüssigen Zusammensetzung erfolgt. Vorteilhaft zum Aufbringen der flüssigen Zusammensetzung hat sich ferner das Anlegen eines Vakuums erwiesen. Nach einer bevorzugten Ausführungsform der Erfindung umfasst das Aufbringen der flüssigen Zusammensetzung das Anlegen eines Vakuums. Hierdurch kann in dem porösen Trägermaterial enthaltene Luft in kurzer Zeit durch die flüssige Zusammensetzung, in der das poröse Trägermaterial eingetaucht bzw. mit der das poröse Trägermaterial geflutet ist, verdrängt werden und somit eine schnelle, vollständige Benetzung des porösen Trägermaterials, d.h. die Benetzungsdauer für eine vollständige Benetzung liegt unter 1 h, insbesondere unter 40 min, bevorzugt zwischen 20 und 40 min, mit der flüssigen Zusammensetzung sichergestellt werden, ohne dass das Trägermaterial längere Zeit in der flüssigen Zusammensetzung verweilen muss. Alternativ kann eine möglichst vollständige Benetzung auch dadurch erreicht werden, dass das Aufbringen der flüssigen Zusammensetzung ferner das Ruhen des eingetauchten porösen Trägermaterials in der flüssigen Zusammensetzung umfasst. Dabei sind Verweildauern von mindestens 3 h bis zu 24 h zweckmäßig. Bevorzugt erfolgt das Ruhen des eingetauchten porösen Trägermaterials in der flüssigen Zusammensetzung bei einer Verweildauer von mindestens 3 h bis 5 h. Praktische Versuche haben gezeigt, dass die Beladung des porösen Trägers sich nach dieser Verweildauer nur noch marginal verändert. Gemäß einer weiteren Ausführungsform der Erfindung umfasst das Aufbringen der flüssigen Zusammensetzung auf das poröse Trägermaterial auch das Rühren des porösen Trägermaterials in der flüssigen Zusammensetzung oder der flüssigen Zusammensetzung.

Unter "zumindest teilweisem Entfernen" der flüssigen Zusammensetzung wird hier ein vollständiges oder teilweises, Aufheben des Kontakts zwischen flüssiger Zusammensetzung und porösem Trägermaterial verstanden. Dabei bleiben selbstverständlich Bestandteile der flüssigen Zusammensetzung an dem porösen Trägermaterial adsorbiert. Beispielsweise kann das zumindest teilweise Entfernen der flüssigen Zusammensetzung durch Abfiltrieren, Zentrifugieren, Trocknen oder Sprühtrocknen erreicht werden. Gemäß einer Ausführungsform der Erfindung wird das zumindest teilweise Entfernen der flüssigen Zusammensetzung durch Abfiltrieren erreicht.

Durch das Abfiltrieren ist das erhaltene beladene poröse Trägermaterial noch feucht. Praktische Versuche haben gezeigt, dass es bereits in einem solchen feuchten Zustand vorteilhaft eingesetzt werden kann um die Formaldehydemission in einem Holzwerkstoff zu reduzieren.

Alternativ kann das beladene poröse Trägermaterial nach dem Abfiltrieren getrocknet werden. Gemäß einer weiteren Ausführungsform der Erfindung umfassen die erfindungsgemäßen Verfahren nach dem zumindest teilweisen Entfernen der flüssigen Zusammensetzung in einem der Schritte b1) und c3) sowie b2) und/oder d2) ferner das Trocknen des porösen Trägermaterials. Das Trocknen des feuchten beladenen porösen Trägermaterials findet vorteilhafterweise bei Temperaturen zwischen 20 und 80°C, insbesondere 20 bis 40°C, bevorzugt bei 30°C. statt. Bevorzugt beträgt die Luftfeuchtigkeit dabei von 2 bis 10%, insbesondere 5%,. Das Trocknen des feuchten Trägermaterials erfolgt dabei vorzugsweise bis zu einer Restfeuchte von unter 15%, bevorzugt unter 5%, besonders bevorzugt unter 3%. Die Bestimmung der Restfeuchte erfolgt mittels Gefriertrocknung bis zur Gewichtskonstanz. Erfahrungsgemäß ist die Gewichtskonstanz nach einer Dauer der Gefriertrocknung von 2 Tagen erreicht. Zur Verbesserung der Rieselfähigkeit des porösen Trägermaterials kann diesem ein gängiges Rieselhilfsmittel zugesetzt werden. Gängige Rieselhilfsmittel sind dem Fachmann bekannt und können beispielsweise aus dem trockenen unbeladenen porösen Trägermaterial bestehen. Bevorzugt wird als Rieselhilfsmittel pyrogene Kieselsäure oder Kieselgur, besonders bevorzugt Kieselgur, eingesetzt.

Es ist ferner denkbar, dass die im erfindungsgemäßen Verfahren genannten Schritte des Aufbringens und des teilweisen Entfernens der flüssigen Zusammensetzung mehrfach hintereinander wiederholt werden. Hierdurch kann vorteilhaft ein höherer Beladungsgrad des porösen Trägermaterials mit der Substanz A und/oder B erreicht werden. Hierbei kann der Schritt des Trocknens ebenfalls nach jedem teilweisen Entfernen der Lösung durchgeführt werden oder erst nach Abschluss der Wiederholungen der Schritte des Aufbringens und des Entfernens der flüssigen Zusammensetzung.

Die Erfindung betrifft ferner die Verwendung eines erfindungsgemäßen porösen Trägersystems zur Reduktion der Formaldehydemission in einem Holzwerkstoff. Dabei gilt für die Merkmale der Verwendung das oben zu den Merkmalen des erfindungsgemäßen porösen Trägersystems oder seinen Ausführungsformen Ausgeführte entsprechend. Insbesondere sind gemäß einer bevorzugten Ausführungsform der erfindungsgemäßen Verwendung die Formaldehyd bindende Substanz A und die Hydroxid freisetzende Substanz B in mindestens einem porösen Trägermaterial A enthalten. In einer alternativen Ausführungsform der erfindungsgemäßen Verwendung ist die Formaldehyd bindende Substanz A in mindestens einem porösen Trägermaterial A und die Hydroxid freisetzende Substanz B in mindestens einem porösen Trägermaterial B enthalten.

Die oben bereits genannten Vorteile des erfindungsgemäßen porösen Trägersystems gelten auch für die erfindungsgemäße Verwendung des porösen Trägersystems in einem Holzwerkstoff. Insbesondere kann durch die Verwendung des porösen Trägersystems die Formaldehydemission des Holzwerkstoffs reduziert werden, ohne dass dabei, im Vergleich zu den aus dem Stand der Technik bekannten Systemen, die Festigkeits- und Quellungseigenschaften des Holzwerkstoffs negativ beeinträchtigt werden. Im Vergleich zur Verwendung von aus dem Stand der Technik bekannten Systemen zur Reduktion der Formaldehydemission in einem Holzwerkstoff kann die Festigkeit des Holzwerkstoffs bei gleichzeitiger Reduktion der Formaldehydemission sogar verbessert werden. Auch kann durch die Verwendung des porösen Trägersystems im Vergleich zur Verwendung der bekannten Systeme zur Reduktion der Formaldehydemission eine Verbesserung des Quellverhaltens und/oder der Wasseraufnahme erreicht werden. Ein Grund hierfür könnte sein, dass die Formaldehyd bindende Substanz A sowie die Hydroxid freisetzende Substanz B verzögert aus dem porösen Träger abgegeben werden und somit die Aushärtungsgeschwindigkeit sowie den Aushärtungsgrad des Bindemittelzusammensetzung bei der Herstellung des Holzwerkstoffs nicht negativ beeinflussen. Durch die Hydroxid freisetzende Substanz B wird erst die fertige Leimfuge durch verzögerte Freisetzung von Hydroxid neutralisiert, was einer Hydrolyse der Leimfuge vorbeugt und somit weitere Formaldehydemission sowie mit der Hydrolyse verbundenen Festigkeitsverlust und erhöhte Quellung und/oder Wasseraufnahme der Leimfuge des Holzwerkstoffs verhindert.

Die Erfindung betrifft ferner einen Holzwerkstoff, der ein oben beschriebenes erfindungsgemäßes poröses Trägersystem oder dessen Ausführungsformen zur Reduktion der Formaldehydemission umfasst. Dabei gilt für die Merkmale des Holzwerkstoffs das oben zu den Merkmalen des erfindungsgemäßen porösen Trägersystems oder seinen Ausführungsformen Ausgeführte und das weiter unten zu den Merkmalen des Verfahrens zur Herstellung des Holzwerkstoffs oder dessen Ausführungsformen Ausgeführte entsprechend. Ein derartiger Holzwerkstoff kann besonders gut zur Herstellung eines Laminats, Bodenbelags, einer Arbeitsplatte, Tischplatte, eines Möbels oder eines Teils einer Gebäudewand oder -decke verwendet werden.

Gegenstand der Erfindung ist auch ein Verfahren zur Herstellung des oben beschriebenen erfindungsgemäßen Holzwerkstoffs oder dessen Ausführungsformen, das folgende Schritte umfasst:

a) Bereitstellen eines lignocellulosehaltigen Materials in Form von Holzpartikeln;
b) Beleimen des lignocellulosehaltigen Materials mit einer Zusammensetzung, die mindestens ein Aminoplastharz umfasst,
c) Verpressen zu einem Holzwerkstoff,

wobei vor, während und/oder nach mindestens einem der Schritte a) oder b) ein erfindungsgemäßes poröses Trägersystem zugegeben wird. Die Schritte a) bis c) werden vorzugsweise in alphabetischer Reihenfolge nacheinander durchgeführt. Insbesondere Schritte a) und b) können jedoch auch kombiniert erfolgen.

Formaldehydemission, Quellung, Querzugfestigkeit und Wasseraufnahme sind wichtige Kenngrößen für Holzwerkstoffe. Überraschenderweise wurde in praktischen Versuchen herausgefunden, dass diese Kenngrößen in Holzwerkstoffen, die durch das erfindungsgemäße Verfahren hergestellt wurden, verbessert sind. Insbesondere können bei Verwendung des erfindungsgemäßen porösen Trägersystems eine Formaldehyd bindende Substanz A und eine Hydroxid freisetzende Substanz B während des Herstellungsverfahrens zugegeben werden, ohne dass es zu einer Verschlechterung dieser Kenngrößen kommt. So kann beispielsweise die Querzugfestigkeit der hergestellten Holzwerkstoffe, im Vergleich zu solchen bei denen die reinen Substanzen A und/oder B, d.h. die Substanzen ohne Trägermaterial, oder bei denen die Substanz A auf einem Trägermaterial während des Herstellungsverfahrens zugegeben werden, verbessert werden. Ferner kann die Quellung und/oder die Wasseraufnahme der hergestellten Holzwerkstoffe, im Vergleich zu solchen bei denen die reinen Substanzen A und/oder B oder die Substanz A auf einem Trägermaterial während des Herstellungsverfahrens zugegeben werden, deutlich reduziert werden.

Wenn hier von "lignocellulosehaltigem Material" die Rede ist, ist damit pflanzliches Material gemeint, das Lignocellulose enthält. Lignocellulose im Sinne der Erfindung enthält Cellulose und/oder Hemicellulose sowie Lignin.

"Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine $\beta$-1,4-glykosidische Bindung verknüpft sind.

"Hemicellulose" ist eine Sammelbezeichnung für verschiedene Bestandteile pflanzlicher Zellwände. Bei den Hemicellulosen handelt sich um verzweigte Polysaccharide mit einer geringeren Kettenlänge - üblicherweise weniger als 500 Zuckereinheiten - welche aus verschiedenen Zucker-Monomeren aufgebaut sind. Hemicellulose ist im Wesentlichen aus verschiedenen Zucker-Monomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose bestehen zum überwiegenden Teil aus Zucker-Monomeren mit fünf Kohlenstoffatomen (Pentosen). Mannose bzw. Galactose bestehen hauptsächlich aus Zucker-Monomeren mit sechs Kohlenstoffatomen (Hexosen).

"Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

"Hydrolyse" im Sinne der Erfindung kann insbesondere die Spaltung einer (bio)chemischen Verbindung durch Reaktion mit Wasser bedeuten. Insbesondere kann dabei formal ein Wasserstoffatom an das eine Spaltstück und der verbleibende Hydroxylrest an das andere Spaltstück abgegeben werden.

Wenn hiervon "Holzwerkstoff" die Rede ist, dann werden darunter erfindungsgemäß verschiedenste Werkstoffe auf Span- oder Faserbasis verstanden, die aus Holz bestehen oder Holz enthalten. Holzspanwerkstoffe (Spanplatten im weiteren Sinne) bezeichnet eine Produktgruppe im Bereich der Holzwerkstoffe, die aus Holzpartikeln und mindestens einem Bindemittel mittels Wärme und Druck hergestellt werden. Eine andere Produktgruppe im Bereich der Holzwerkstoffe, die nicht von dem Begriff "Holzspanwerkstoff" wie hier verwendet umfasst ist, stellen die Holzfaserwerkstoffe dar. Zu letzteren gehören Faserplatten, wie beispielsweise die mitteldichten (MDF) und hochdichten (HDF) Faserplatten. Im Gegensatz zu den Holzspanwerkstoffen, wird zur Herstellung der Faserplatten das verwendete Holz bis hin zur Holzfaser, Faserbündeln oder Faserbruchstücken aufgeschlossen. Für den Fachmann sind Holzspanwerkstoffe und Holzfaserstoffe zwei grundsätzlich verschiedene Werkstoffkategorien, die zu unterscheiden sind.

Grundsätzlich kennt der Fachmann unterschiedliche Holzwerkstoffe. Beispiele hierfür sind Spanplatten, mitteldichte Faserplatten (MDF) und hochdichte Faserplatten (HDF), niedrigdichte Faserplatten (LDF), Flachpressplatten, Einschichtplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melanin Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB-Platten können gemäß ihrer Verwendung nach EN 300 eingeteilt werden. Solche Holzwerkstoffe können beispielsweise zu Laminaten, Bodenbelägen, Arbeitsplatten, Tischplatten, Teilen einer Gebäudewand oder -decke und/oder Holzformteilen weiterverarbeitet werden.

Gemäß einer bevorzugten Ausführungsform der Erfindung ist der Holzwerkstoff ein Holzspanwerkstoff.

Gemäß einer Ausführungsform der Erfindung ist der Holzwerkstoff eine Holzwerkstoffplatte. Vorzugsweise ist der Holzwerkstoff eine Span- oder OSB-Platte. Praktische Versuche haben gezeigt, dass sich das erfindungsgemäße Verfahren sowie die beschriebenen Ausführungsformen besonders gut zur Herstellung von gepressten Holzwerkstoffen, insbesondere zur Herstellung von Span- und OSB-Platten eignen.

Vorzugsweise besteht der Holzwerkstoff, beziehungsweise dessen Vor- oder Zwischenprodukt, im Wesentlichen aus lignocellulosehaltigem Material und Bindemitteln. "Im Wesentlichen" bedeutet hierbei zu 90 Gew.-%, 95 Gew.-%, 99 Gew.-% oder 99,9 Gew.-%, jeweils bezogen auf das Gesamtgewicht des Holzwerkstoffs.

Es ist jedoch auch möglich, dass der Holzwerkstoff, beziehungsweise dessen Vor- oder Zwischenprodukt, weitere Stoffe enthält. Beispielsweise können Netz- und/oder Trennmittel für einen verbesserten Pressvorgang zugesetzt werden. Weiterhin können Pilzschutzmittel oder Feuerschutzmittel zugesetzt werden. Dadurch können die fertigen lignocellulosehaltigen Holzwerkstoffe speziellen Anforderungen genügen. Derartige Anforderungen wurden oben bereits erwähnt und sind dem Fachmann bekannt. Der Holzwerkstoff kann beispielsweise leichte Partikel, insbesondere expandierte Styrolpartikel, zur Gewichtsreduktion und/oder Glas- oder Kohlefasern zur Steigerung der Festigkeit enthalten. Insbesondere können derartige weitere Stoffe im erfindungsgemäßen Verfahren vor, während und/oder nach mindestens einem der Schritte a) oder b) hinzugefügt werden.

Schritt a) des erfindungsgemäßen Verfahrens sieht die Bereitstellung von Holzpartikeln vor. Wenn hier von Holzpartikeln die Rede ist, so sind damit jegliche Holzpartikel, die für die Herstellung von Holzwerkstoffen eingesetzt werden können, gemeint. Holzpartikel können jegliche Zerkleinerungsprodukte von Lignocellulose enthaltenden Materialien sein.

Zur Herstellung von Holzwerkstoffen gemäß dem erfindungsgemäßen Verfahren wird in Schritt a) ein lignocellulosehaltiges Material verwendet, welches in Form von Holzpartikeln vorliegt. Je nach Art des Holzwerkstoffs kann das lignocellulosehaltige Material durch Zerkleinern von Lignocellulose enthaltenden Materialien erzeugt werden. Erfindungsgemäß wird das lignocellulosehaltige Material in Form von Holzpartikeln bereitgestellt, d. h. es kann Holzpartikel enthalten oder daraus bestehen. Holzpartikel, wie hier verwendet, können Holz enthalten oder aus Holz bestehen. Beispiele für Holzpartikel sind feinteiliges Holzmaterial, Holzspäne, Holzstrands, Holzwafer, Holzflakes und Holzfasern.

Üblicherweise werden die Holzpartikel für Holzwerkstoffe durch schneidende oder mahlende Verfahren gewonnen. In einem optionalen Schritt können die Holzpartikel vor der Weiterverarbeitung getrocknet oder zwischengelagert werden. Auch können dem lignocellulosehaltigen Material weitere Stoffe zugemischt werden.

Das erfindungsgemäße Verfahren umfasst in Schritt b) das Beleimen des lignocellulosehaltigen Materials mit einer Zusammensetzung, die mindestens ein Aminoplastharz umfasst.

Wenn hier von "Beleimen " die Rede ist, dann kann darunter das ganze oder teilweise Benetzen mit einer Zusammensetzung, die ein Bindemittel enthält ("Bindemittel-haltige Zusammensetzung"), verstanden werden. Derartige Zusammensetzungen werden vom Fachmann insbesondere auch als "Leimflotte" bezeichnet. Erfindungsgemäß handelt es sich bei dem Bindemittel um ein Aminoplastharz. Beleimen kann insbesondere auch das gleichmäßige Verteilen der Bindemittel-haltigen Zusammensetzung auf den Holzpartikeln bedeuten. Das Auftragen der Bindemittel-haltigen Zusammensetzung kann beispielsweise durch Tränken oder Aufsprühen erfolgen.

Die Menge des beim Beleimen eingesetzten Bindemittels beträgt vorzugsweise 0,1 bis 20 Gew.-%, insbesondere 1 bis 16 Gew.-%, noch bevorzugter 4 bis 14 Gew.-%, bezogen auf das Holztrockengewicht (Festharz/atro). Für viele Anwendungen ist es besonders praxisgerecht, wenn das Bindemittel in einer Menge von 0,1 bis 15 Gew.-% bezogen auf das Holztrockengewicht (Festharz/atro) eingesetzt wird.

Wenn hier von "Trockengewicht" die Rede ist, dann ist damit der Trockenmassegehalt gemeint. Der Trockenmassegehalt ist jener Bestandteil einer Substanz, der nach Abzug der Masse des enthaltenen Wassers übrig bleibt. Dies bedeutet, dass sich der Trockenmassegehalt und der Wassergehalt einer Substanz zu 100 Prozent ergänzen.

Grundsätzlich ist das erfindungsgemäße Verfahren oder eine seiner Ausführungsformen für eine Vielzahl von Bindemittel-Holzpartikel-Kombinationen geeignet. Erfindungsgemäß wird mindestens ein Aminoplastharz als Bindemittel eingesetzt. Zusätzlich sind auch andere Kunstharze, insbesondere Phenoplaste, Vinylacetate, Isocyanate, Epoxidharze und/oder Acrylharze im erfindungsgemäßen Verfahren einsetzbar. Beispiele für Aminoplastharze sind Harnstoff-Formaldehyd-Harze (UF), Melamin verstärkte Harnstoff-Formaldehyd-Harze (MUF), Melamin-Harnstoff-Phenol-Formaldehyd-Harze(MUPF), oder Mischungen hiervon. Gemäß einer bevorzugten Ausführungsform des erfindungsgemäßen Verfahrens ist das mindestens eine Aminoplastharz ausgewählt aus Harnstoff-Formaldehyd-Harzen (UF), Melamin verstärkten Harnstoff-Formaldehyd-Harzen (MUF) oder Mischungen davon.

In einer bevorzugten Ausführungsform des erfindungsgemäßen Verfahrens umfasst die mindestens ein Aminoplastharz umfassende Zusammensetzung in Schritt b) ferner mindestens einen Härter. Beispiele für geeignete Härter sind starke organische Säuren, anorganische Säuren, wie Schwefelsäure und Phosphorsäure, Salze, die in Wasser sauer reagieren, wie Aluminiumchlorid und Aluminiumnitrat, Salze, die durch Reaktion mit Komponenten des Kunstharzes, vorzugsweise mit Formaldehyd, eine Säure generieren, wie Ammoniumphosphat, Ammoniumnitrat, Ammoniumsulfat und Ammoniumchlorid, und Mischungen der vorgenannten Substanzen. Bevorzugt werden im erfindungsgemäßen Verfahren als Härter Ammoniumnitrat oder Ammoniumsulfat eingesetzt. Vorteilhafterweise enthält das Bindemittel 0,1 bis 15 Gew.-% des Härters, insbesondere 0,5 bis 5 Gew.-%, bezogen auf den Festharzanteil des Aminoplastharzes.

Grundsätzlich sind dem Fachmann verschiedene Methoden bekannt, um Holzwerkstoffe durch Verpressen herzustellen. Gemäß einer Ausführungsform der Erfindung werden die in Schritt b) beleimten Holzpartikel in Schritt c) zu einem Holzwerkstoff verpresst. Vorzugsweise handelt es sich bei Schritt c) um eine Heißverpressung. Optimale Ergebnisse können erzielt werden, wenn der Pressfaktor beim Heißpressen von 2 bis 10 s/mm, bevorzugt von 3 bis 6 s/mm, beträgt. Unter Pressfaktor wird hier insbesondere die Verweilzeit des lignocellulosehaltigen Holzwerkstoffs in Sekunden je Millimeter Dicke oder Stärke des fertigen gepressten lignocellulosehaltigen Holzwerkstoffs in der Presse verstanden.

Geeignete Temperaturen für das Verpressen in Schritt c) des erfindungsgemäßen Verfahrens oder einer seiner Ausführungsformen sind Temperaturen von 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm$^2$, verwendet wird. Derartige Drücke stellen eine besonders gute Verklebung der lignocellulosehaltigen Partikel miteinander sicher. Zudem kann mit einem solchen Pressdruck eine hohe Festigkeit der lignocellulosehaltigen Holzwerkstoffe erreicht werden.

Beim erfindungsgemäßen Verfahren wird vor, während und/oder nach mindestens einem der Schritte a) oder b) ein erfindungsgemäßes poröses Trägersystem zugegeben. Dies kann auf vielfältige Weise geschehen. Insbesondere kann das poröse Trägersystem beispielsweise vorgelegt werden und das lignocellulosehaltige Material in Form von Holzpartikeln darauf appliziert werden. Das poröse Trägersystem kann auch vor dem Bereitstellen des lignocellulosehaltigen Materials in Form von Holzpartikeln mit diesen gemischt werden und dann in einer Mischung mit den Holzpartikeln in Schritt a) bereitgestellt werden. Ferner ist es möglich, das poröse Trägersystem zeitgleich mit den Holzpartikeln bereitzustellen, wobei das zeitgleiche Bereitstellen durch zwei getrennte Auftragsvorrichtungen erfolgt.

Ebenfalls möglich ist, dass das poröse Trägersystem dem Aminoplastharz vor und/oder während des Beleimens in Schritt b) zugesetzt wird. Als Zusammensetzung zum Beleimen der Holzpartikel kann auch eine vorher hergestellte Mischung aus Aminoplastharz und porösem Trägersystem verwendet und als solche dann auf die Holzpartikel aufgebracht werden. Die Holzpartikel werden also mit einer Zusammensetzung, die ein Aminoplastharz und ein poröses Trägersystem enthält, beleimt indem eine vorher hergestellte Mischung aus Aminoplastharz und porösem Trägersystem auf die Holzpartikel aufgebracht wird.

Vom erfindungsgemäßen Verfahren sind jedoch ebenfalls solche Ausführungsformen umfasst, bei denen das poröse Trägersystem dem Aminoplastharz erst während des Beleimens zugesetzt wird. Dies kann insbesondere dadurch erfolgen, dass beim Beleimen der Holzpartikel das Aminoplastharz und das poröse Trägersystem getrennt voneinander, ggf. mit weiteren Additiven oder Bindemitteln, auf die Holzpartikel aufgebracht werden. Beispielsweise kann in einem ersten Schritt das Aminoplastharz und in einem zweiten Schritt das poröse Trägersystem auf die Holzpartikel aufgebracht werden. Umgekehrt ist es auch möglich, in einem ersten Schritt zunächst das poröse Trägersystem und dann in einem zweiten Schritt das Aminoplastharz auf die Holzpartikel aufzubringen. Auch ein gleichzeitiges Aufbringen von Aminoplastharz und porösem Trägersystem durch zwei getrennte Aufbringvorrichtungen, wie zum Beispiel Düsen, auf die Holzpartikel ist möglich. Demgemäß können die Holzpartikel mit einer Zusammensetzung, die ein Aminoplastharz und ein poröses Trägersystem enthält, beleimt werden, indem das Aminoplastharz und das poröse Trägersystem getrennt voneinander auf die Holzpartikel aufgebracht werden.

Ferner umfasst das erfindungsgemäße Verfahren auch das Aufbringen des Trägersystems nach dem Beleimen in Schritt b), das heißt vor dem Verpressen in Schritt c).

Praktische Versuche haben gezeigt, dass die Menge des im erfindungsgemäßen Verfahren vor, während und/oder nach mindestens einem der Schritte a) oder b) zugegebenen erfindungsgemäßen porösen Trägersystems vorzugsweise zwischen 0,1 bis 10 Gew.-%, insbesondere zwischen 1 bis 8 Gew.-%, vorzugsweise zwischen 1 bis 5 Gew.-%, besonders bevorzugt zwischen 1,5 bis 3 Gew.-% bezogen auf das Holztrockengewicht (fest/atro) beträgt.

Nachfolgend wird die Erfindung beispielhaft anhand von Ausführungsbeispielen näher beschrieben.

**Erfindungsgemäßes Beispiel 1**

Zunächst wird die Herstellung eines porösen Trägersystems beschrieben. Die Varianten 1 und 2 dienen dabei der Herstellung von einem porösen Trägersystem bei dem die Substanz A in mindestens einem porösen Trägermaterial A und Substanz B in mindestens einem porösen Trägermaterial B enthalten ist. Die Variante 3 dient der Herstellung von einem porösen Trägersystem bei dem die Substanz A und die Substanz B in mindestens einem porösen Trägermaterial A enthalten sind.

Als poröses Trägermaterial A und B wurde Kieselgur verwendet. Das poröse Trägermaterial A wurde mit einer frisch hergestellten 40 Gew.-%igen-Harnstoff-Lösung, bezogen auf das Gesamtgewicht von Harnstoff und Wasser und das poröse Trägermaterial B mit einer 20 Gew.-%igen Natriumsulfit-Lösung, bezogen auf das Gesamtgewicht von Natriumsulfit und Wasser, folgendermaßen beladen:

Variante 1:
Es wurden 500 g Kieselgur eingewogen und mit 1 Liter der frisch hergestellten Harnstoff- bzw. Natriumsulfit Lösung bedeckt. Anschließend wurde Vakuum angelegt bis keine Blasenbildung durch aus den Poren des Kieselgurs ausweichende Luft mehr auftrat, das mit Harnstoff bzw. Natriumsulfit beladene Kieselgur abfiltriert und in einem Klimaschrank bei 30°C und 5% Luftfeuchte getrocknet.

Variante 2:
Es wurden 500 g Kieselgur eingewogen und mit 1 Liter der frisch hergestellten Harnstoff- bzw. Natriumsulfit Lösung bedeckt und in einem verschlossenen Behälter für 24 h gelagert. Anschließend wurde das mit Harnstoff bzw. Natriumsulfit beladene Kieselgur abfiltriert.

Variante 3:

Es wurden 500 g Kieselgur eingewogen und mit 1 Liter einer frisch hergestellten Lösung aus 200 g Harnstoff und 100 g Natriumsulfit in 700 g Wasser bedeckt und in einem verschlossenen Behälter für 24 h gelagert. Anschließend wurde das mit Harnstoff und
Natriumsulfit beladene Kieselgur abfiltriert und getrocknet.

**Beispiel 2**

Es wurden Plattenversuche unter folgenden Bedingungen durchgeführt:

| Plattendicke: | 14 mm |
| --- | --- |
| Spanmaterial: | Holzspäne mit einer durchschnittlichen Länge von 1 bis 12 mm, einer durchschnittlichen Breite von 1 bis 6 mm und einer durchschnittlichen Dicke 0,1 bis 2 mm |
| Beleimung: | Als Bindemittel wurde Harnstoff-Formaldehyd in einer Menge von 8 Gew.-% bezogen auf das Holztrockengewicht (Festharz/atro) eingesetzt. |
| Härter: | 60%iges Ammoniumnitrat, wurde in einer Menge von 3 Gew.-% bezogen auf den Festharzanteil des Aminoplastharzes eingesetzt. |
| Zieldichte: | 600 kg/m$^3$ |
| Presstemperatur: | 220°C |
| Pressfaktor: | 9,3 s/mm |

Es wurden drei verschiedene Plattenarten hergestellt. Pro Plattenart wurden jeweils zwei Platten hergestellt, d.h. die im Folgenden bei der Herstellung der jeweiligen Platten angegebene hergestellte Menge wird nochmals verdoppelt.

Vergleichsbeispiel: Referenzplatte

Als Referenz diente eine Platte, die unter den oben angegebenen Bedingungen hergestellt wurde ohne dass eine Zugabe von reinem Harnstoff bzw. des erfindungsgemäßen porösen Trägersystems erfolgte.

Platte gemäß dem Stand der Technik

Als Platte gemäß dem Stand der Technik, die bereits mit einem Material zur Reduktion der Formaldehydemission ausgestattet ist, wurden:

(1) zwei Platten unter den oben angegebenen Bedingungen hergestellt und zusätzlich nach der Beleimung, d.h. vor dem Verpressen, 0,5 bzw. 2 Gew.-% Harnstoff (U) bezogen auf das Holztrockengewicht (fest/atro) zugegeben, sowie

(2) sechs Platten unter den oben angegebenen Bedingungen hergestellt und zusätzlich nach der Beleimung, d.h. vor dem Verpressen, 0,5, 1,5 bzw. 3 Gew.-% mit Harnstoff beladenes Kieselgur (KGU) bzw. mit Natriumsulfit beladenes Kieselgur (KGS) jeweils bezogen auf das Holztrockengewicht (fest/atro) zugegeben.

Erfindungsgemäße Platte

Als erfindungsgemäße Platte wurden drei Platten unter den oben angegebenen Bedingungen hergestellt und zusätzlich nach der Beleimung, d.h. vor dem Verpressen, eine Mischung von:

(1) 0,4 Gew.-% mit Harnstoff beladenes Kieselgur (KGU) und 0,1 Gew.-% mit Natriumsulfit beladenes Kieselgur (KGS) (insgesamt 0,5 Gew.-% beladenes Kieselgur) bezogen auf das Holztrockengewicht (fest/atro) zugegeben sowie
(2) 2,7 Gew.-% mit Harnstoff beladenes Kieselgur (KGU) und 0,3 Gew.-% mit Natriumsulfit beladenes Kieselgur (KGS) (insgesamt 3 Gew.-% beladenes Kieselgur) bezogen auf das Holztrockengewicht (fest/atro) zugegeben.
(3) 3 Gew.-% mit Harnstoff und Natriumsulfit beladenes Kieselgur (KGUS) bezogen auf das Holztrockengewicht (fest/atro) zugegeben.

Im Anschluss an die Plattenpressung wurden die Querzugfestigkeit, Formaldehydemission, Quellung und Wasseraufnahme der Platten ermittelt. Für die Ermittlung der Querzugfestigkeit, Quellung und Wasseraufnahme wurden zuerst jeweils pro Platte zehn Prüfkörper der Geometrie 50 x 50 x 14 mm zugeschnitten. Für die Ermittlung der Formaldehydemission mittels Desiccatormessung wurden zuerst Prüfkörper mit den Dimensionen 5 x 15 x 1,4 cm zugeschnitten. Insgesamt muss die Fläche der Proben bei der Desiccatormessung 1800 cm$^2$ betragen, daher werden bei 14 mm Platten neun Proben pro Platte benötigt. Für die Ermittlung der Formaldehydemission mittels Perforatormethode wurden zuerst jeweils pro Platte zehn Prüfkörper der Geometrie 2,5 x 2,5 x 1,4 cm zugeschnitten. Jeder Prüfkörper wurde vor der Prüfung mittels eines digitalen Dickentasters vermessen, sowie die Masse bestimmt und daraus die Dichte errechnet.
Die so hergestellten Platten wurden nach EN 319 (Querzug-Festigkeitsprüfung), EN 317 (Dickenquellung und in Anlehnung daran auch die Wasseraufnahme), JIS 1460 (Desiccatormessung; Formaldehydemissionsprüfung) bzw. DIN EN ISO 12460-5 (Perforatormethode; Formaldehydemissionsprüfung) geprüft.

### Querzugfestigkeit

Die Bestimmung der Querzugfestigkeit erfolgte nach EN 319. Hierzu wurde jeder Prüfkörper mittels eines Schmelzklebers mit zwei Aluminiumjochen an der Ober- und Unterseite verklebt und dann nach Abkühlen an der Prüfmaschine (Zwick Zmart.Pro) bei konstanter Prüfgeschwindigkeit von 1 mm/min auseinander gezogen.

Die zum Bruch in der Mitte des Prüfkörpers führende Kraft wurde aufgezeichnet und die daraus resultierende Querzugfestigkeit über die Probenfläche berechnet [N/mm$^2$].

### Desiccatormessung

Die Bestimmung der Formaldehydemission erfolgte anhand der Desiccatormessung nach JIS 1460. Die Proben werden in einem Probenbehälter in einen Desiccator gegeben, in dem sich je eine Schale mit 300 mL deionisierten Wasser befindet. Zusätzlich werden zwei Blindwerte, d.h. Desiccator und Wasser ohne Probe, gemessen.

Die Proben verweilen für 24 h in den Desiccatoren. Danach werden aus jeder Wasserschale 10 mL Wasser entnommen und je 10 mL Acetylacetonlösung (4ml/l) und Ammoniumacetatlösung (200g/l) hinzugefügt. Diese Mischung wird auf 40°C für 15 min erwärmt und bei einer weiteren Stunde Lagerung in dunkler Umgebung auf Raumtemperatur abgekühlt.

Die Messung der Extinktion erfolgt am Photometer bei einer Wellenlänge von 412 nm. Diese wird danach nach einer hinterlegten Kalibrierung in mg/l umgerechnet.

### Perforatormethode

Die Bestimmung der Formaldehydemission wurde mittels der Perforatormethode nach DIN EN ISO 12460-5 durchgeführt. Dabei handelt es sich um eine Extraktionsmethode mit Toluol als Lösungsmittel (ca. 600 mL). Die Probenmenge betrug rund 100 - 150 g für die Perforatormessung und rund 100 g für die Bestimmung der Plattenfeuchte (das Ergebnis bezieht sich auf eine Plattenfeuchte von 6,5% und wurde nach einer hinterlegten Formel berechnet).

### Dickenquellung

Die Bestimmung der Dickenquellung nach 24-stündiger Wasserlagerung erfolgte nach DIN EN 317. Die Prüfkörper wurden hierfür bei einer Wassertemperatur von 20 °C für 24 h unter Wasser gelagert. Anschließend wurde die Dickenzunahme relativ zur Ausgangsdicke bestimmt und die prozentuale Dickenquellung berechnet.

### Wasseraufnahme

Die Wasseraufnahme wurde an den Proben der Dickenquellung bestimmt, also ebenfalls nach 24 h Wasserlagerung. Zur Berechnung wurde das Gewicht nach diesen 24 h gemessen und die Wasseraufnahme anschließend nach folgender Formel berechnet:

$$\text{Wasseraufnahme } [\%] = \frac{\text{Masse}_{nachher} - \text{Masse}_{vorher}}{\text{Masse}_{vorher}} * 100$$

Im Folgenden werden in Tabelle 1 die Versuchsergebnisse der Vergleichsbeispiele, d.h. von Referenzplatten ohne Material zur Reduktion der Formaldehydemission, der Platten aus dem Stand der Technik mit Material zur Reduktion der Formaldehydemission, sowie der erfindungsgemäßen Platten, enthaltend das erfindungsgemäße poröse Trägersystem, dargestellt.

Die Messungen erfolgten an 10 Prüflingen pro Platte. Da für jede Plattenart zwei Platten hergestellt wurden, handelt es sich bei den dargestellten Versuchsergebnissen der Bestimmung der Formaldehydemission, Querzugfestigkeit, Quellung und Wasseraufnahme nach den oben beschriebenen Methoden in Tabelle 1 jeweils um Mittelwerte aus 20 Prüflingen.

**Tabelle 1:**

| Bezeichnung | MW Querzug | MW Desiccator | MW Perforator 6,5% | MW Quellung | MW Wasseraufnahme |
|---|---|---|---|---|---|
| | $N/mm^2$ | mg/l | mg/100g | % | % |
| Referenz (Vergleichsbeispiel) | 0,63 | 1,49 | 7,24 | 25,81 | 80,29 |
| 0,5 Gew.-% U | 0,54 | 1,00 | 5,13 | 34,71 | 95,81 |
| 2 Gew.-% U | 0,17 | 0,46 | 2,82 | 55,22 | 125,87 |
| 0,5 Gew.-% KGU | 0,62 | 1,32 | 6,35 | 31,54 | 87,27 |
| 0,4Gew.-% KGU + 0,1 Gew.-% KGS | 0,64 | 1,31 | 6,20 | 28,09 | 86,61 |
| 1,5 Gew.-%% KGU | 0,52 | 0,82 | 4,99 | 30,05 | 92,44 |
| 1,5 Gew.-%KGS | 0,61 | 1,45 | 7,31 | 26,85 | 87,83 |
| 3 Gew.-% KGU | 0,42 | 0,53 | 3,27 | 40,98 | 99,44 |
| 3 Gew.-% KGS | 0,54 | 1,33 | 7,51 | 24,08 | 85,88 |
| 2,7 Gew.-% KGU + 0,3 Gew.-% KGS | 0,44 | 0,39 | 2,83 | 38,01 | 97,70 |
| 3 Gew.-% KGUS | 0,51 | 0,69 | 4,45 | 27,55 | 91,32 |

MW: Mittelwert aus 20 Prüflingen, U= Harnstoff, S= Natriumsulfit, KG=Kieselgur Überraschenderweise konnte festgestellt werden, dass durch die Zugabe des mit Harnstoff und/oder Natriumsulfit beladenen Kieselgur ein deutlich verminderter Querzugsfestigkeitseinbruch der Holzwerkstoffe eintritt -bei Zugabe der gleichen Menge in Gew.-% einer der Reinsubstanzen, beispielsweise Harnstoff (U), fällt die Querzugfestigkeit um bis zu 80%.

Der Tabelle 1 ist ferner zu entnehmen, dass die Zugabe einer Mischung von mit Harnstoff beladenem Kieselgur (KGU) und mit Natriumsulfit beladenem Kieselgur (KGS) im Vergleich zur Zugabe derselben Menge in Gew.-% von jeweils nur mit Harnstoff beladenem Kieselgur (KGU) oder nur mit Natriumsulfit beladenem Kieselgur (KGS) bei der Herstellung eines Holzwerkstoffs dazu führt, dass die Formaldehydemission der Holzwerkstoffs, die die Mischung von KGU und KGS umfasst, im Vergleich zur der Formaldehydemission des Holzwerkstoffs die nur KGU bzw. nur KGS KGS umfasst, deutlich reduziert ist. Die Querzugfestigkeit, Quellung und Wasseraufnahme der erfindungsgemäßen Holzwerkstoffs, umfassend eine Mischung aus KGU und KGS, ist im Vergleich zu der Querzugfestigkeit, Quellung und Wasseraufnahme der Holzwerkstoffs aus dem Stand der Technik, umfassend dieselbe Menge in Gew.-% an nur KGU, nicht beeinträchtigt.

Die Zugabe von mit Harnstoff und Natriumsulfit beladenem Kieselgur (KGUS) während der Herstellung eines Holzwerkstoffs führt zu einer im Vergleich zur Zugabe derselben Menge in Gew.-% von nur mit Harnstoff beladenem Kieselgur (KGU) deutlich erhöhten Querzugfestigkeit, geringeren Quellung und geringeren Wasseraufnahme des erfindungsgemäßen Holzwerkstoffs, umfassend mit Harnstoff und Natriumsulfit beladenes Kieselgur, bei gleichzeitig vergleichbarer Formaldehydemission zu dem Holzwerkstoff aus dem Stand der Technik, umfassend mit Harnstoff beladenes Kieselgur (KGU).

**Patentansprüche**

1. Poröses Trägersystem zur Reduktion der Formaldehydemission eines Holzwerkstoffs, umfassend eine Formaldehyd bindende Substanz A und eine Hydroxid freisetzende Substanz B, wobei Substanz A und Substanz B in mindestens einem porösen Trägermaterial A enthalten sind oder wobei Substanz A in mindestens einem porösen Trägermaterial A und Substanz B in mindestens einem porösen Trägermaterial B enthalten ist, wobei das poröse Trägermaterial A und B Kieselgur ist, die Substanz A Harnstoff ist und die Substanz B Natriumsulfit ist.

2. Verfahren zur Herstellung eines porösen Trägersystems zur Reduktion der Formaldehydemission eines Holzwerkstoffs nach Anspruch 1, wobei Substanz A und Substanz B in mindestens einem porösen Trägermaterial A enthalten sind, umfassend folgende Schritte:

a1) Aufbringen einer flüssigen Zusammensetzung, die eine Substanz A und eine Substanz B umfasst, auf ein poröses Trägermaterial A;

b1) Zumindest teilweises Entfernen der flüssigen Zusammensetzung von dem porösen Trägermaterial oder

a2) Aufbringen einer ersten flüssigen Zusammensetzung, die die Substanz A umfasst auf mindestens ein poröses Trägermaterial A,

b2) Zumindest teilweises Entfernen der ersten flüssigen Zusammensetzung von dem mindestens einen porösen Trägermaterial A,

c2) Aufbringen einer zweiten flüssigen Zusammensetzung, die die Substanz B umfasst, auf das mindestens eine poröse Trägermaterial A,

d2) Zumindest teilweises Entfernen der zweiten flüssigen Zusammensetzung von dem mindestens einen porösen Trägermaterial A.

3. Verfahren zur Herstellung eines porösen Trägersystems zur Reduktion der Formaldehydemission eines Holzwerkstoffs nach Anspruch 1, wobei Substanz A in mindestens einem porösen Trägermaterial A und Substanz B in mindestens einem porösen Trägermaterial B enthalten ist, umfassend folgende Schritte:

a) Aufbringen einer flüssigen Zusammensetzung, die eine Substanz A umfasst, auf mindestens ein poröses Trägermaterial A,

b) Aufbringen einer flüssigen Zusammensetzung, die die Substanz B umfasst auf mindestens ein poröses Trägermaterial B,

c) Zumindest teilweises Entfernen der flüssigen Zusammensetzungen von den porösen Trägermaterialien A und B,

d) Mischen der erhaltenen porösen Trägermaterialien A und B.

4. Verfahren nach Anspruch 2 oder 3, wobei das Aufbringen der flüssigen Zusammensetzung ausgewählt ist aus Eintauchen des porösen Trägermaterials in die flüssigen Zusammensetzung, Fluten des porösen Trägermaterials mit der flüssigen Zusammensetzung oder Aufsprühen der flüssigen Zusammensetzung auf das poröse Trägermaterial.

5. Verfahren nach Anspruch 2, 3 oder 4, wobei das Aufbringen der flüssigen Zusammensetzung das Anlegen eines Vakuums umfasst.

6. Verfahren nach einem der Ansprüche 2 bis 5, wobei das Aufbringen der Lösung das Ruhen des eingetauchten porösen Trägermaterials in der Lösung umfasst.

7. Verfahren nach einem der Ansprüche 2 bis 6, wobei das zumindest teilweise Entfernen der Lösung durch Abfiltrieren erreicht wird.

8. Verfahren nach einem der Ansprüche 2 bis 7, ferner umfassend Trocknen des porösen Trägermaterials nach dem zumindest teilweisen Entfernen der Lösung.

9. Verwendung eines porösen Trägersystems nach Anspruch 1 zur Reduktion der Formaldehydemission in einem Holzwerkstoff.

10. Holzwerkstoff, umfassend ein poröses Trägersystem zur Reduktion der Formaldehydemission nach Anspruch 1.

11. Verfahren zur Herstellung eines Holzwerkstoffs nach Anspruch 10, umfassend folgende Schritte:

a) Bereitstellen eines lignocellulosehaltigen Materials in Form von Holzpartikeln;

b) Beleimen des lignocellulosehaltigen Materials mit einer Zusammensetzung, die mindestens ein Aminoplastharz umfasst,

c) Verpressen zu einem Holzwerkstoff,

dadurch gekennzeichnet, dass vor, während und/oder nach mindestens einem der Schritte a) oder b) ein poröses Trägersystem nach Anspruch 1 zugegeben wird.

**Claims**

1. Porous carrier system for reducing the emission of formaldehyde in a wood-based material, comprising a formaldehyde-binding substance A and a hydroxide-releasing substance B, wherein substance A and substance B are contained in at least one porous carrier material A or wherein substance A is contained in at least one porous carrier material A and substance B is contained in at least one porous carrier material B, wherein the porous carrier material A and B are kieselguhr, substance A is urea and substance B is sodium sulfite.

2. Method for producing a porous carrier system for reducing the emission of formaldehyde in a wood-based material according to claim 1, wherein substance A and substance B are contained in at least one porous carrier material A, said method comprising the following steps:

   a1) applying a liquid composition comprising a substance A and a substance B to a porous carrier material A;
   b1) at least partially removing the liquid composition from the porous carrier material or
   a2) applying a first liquid composition comprising substance A to at least one porous carrier material A,
   b2) at least partially removing the first liquid composition from the at least one porous carrier material A,
   c2) applying a second liquid composition comprising substance B to the at least one porous carrier material A,
   d2) at least partially removing the second liquid composition from the at least one porous carrier material A.

3. Method for producing a porous carrier system for reducing the emission of formaldehyde in a wood-based material according to claim 1, wherein substance A is contained in at least one porous carrier material A and substance B is contained in at least one porous carrier material B, said method comprising the following steps:

   a) applying a liquid composition comprising a substance A to at least one porous carrier material A,
   b) applying a liquid composition comprising substance B to at least one porous carrier material B,
   c) at least partially removing the liquid compositions from the porous carrier materials A and B,
   d) mixing the obtained porous carrier materials A and B.

4. Method according to either claim 2 or claim 3, wherein the application of the liquid composition is selected from immersing the porous carrier material in the liquid composition, flooding the porous carrier material with the liquid composition or spraying the liquid composition onto the porous carrier material.

5. Method according to claim 2, claim 3 or claim 4, wherein applying the liquid composition comprises applying a vacuum.

6. Method according to any one of claims 2 to 5, wherein applying the solution comprises resting the immersed porous carrier material in the solution.

7. Method according to any one of claims 2 to 6, wherein the at least partial removal of the solution is achieved by filtering.

8. Method according to any one of claims 2 to 7, further comprising drying the porous carrier material after the at least partial removal of the solution.

9. Use of a porous carrier system according to claim 1 for reducing the emission of formaldehyde in a wood-based material.

10. Wood-based material comprising a porous carrier system for reducing the emission of formaldehyde according to claim 1.

11. Method for producing a wood-based material according to claim 10, comprising the following steps:

   a) providing a lignocellulose-containing material in the form of wood particles;
   b) gluing the lignocellulose-containing material with a composition which comprises at least one aminoplast resin,
   c) compressing said material into a wood-based material,

   **characterized in that** a porous carrier system according to claim 1 is added before, during and/or after at least one of steps a) or b).

**Revendications**

1.  Système de support poreux destiné à réduire l'émission de formaldéhyde d'un matériau dérivé du bois, comprenant une substance A liant le formaldéhyde et une substance B libérant de l'hydroxyde, la substance A et la substance B étant contenues dans au moins un matériau de support poreux A, ou une substance A étant contenue dans au moins un matériau de support poreux A et une substance B étant contenue dans au moins un matériau de support poreux B, les matériaux de support poreux A et B étant du kieselguhr, la substance A étant de l'urée et la substance B étant du sulfite de sodium.

2.  Procédé de fabrication d'un système de support poreux destiné à réduire l'émission de formaldéhyde d'un matériau dérivé du bois selon la revendication 1, dans lequel la substance A et la substance B sont contenues dans au moins un matériau de support poreux A, comprenant les étapes suivantes :

    a1) application d'une composition liquide, comprenant une substance A et une substance B, sur un matériau de support poreux A ;
    b1) élimination au moins partielle de la composition liquide du matériau de support poreux ou
    a2) application d'une première composition liquide comprenant la substance A sur au moins un matériau de support poreux A,
    b2) élimination au moins partielle de la première composition liquide de l'au moins un matériau de support poreux A,
    c2) application d'une seconde composition liquide comprenant la substance B sur l'au moins un matériau de support poreux A,
    d2) élimination au moins partielle de la seconde composition liquide de l'au moins un matériau de support poreux A.

3.  Procédé de fabrication d'un système de support poreux destiné à réduire l'émission de formaldéhyde d'un matériau dérivé du bois selon la revendication 1, dans lequel la substance A est contenue dans au moins un matériau de support poreux A et la substance B est contenue dans au moins un matériau de support poreux B, comprenant les étapes suivantes :

    a) application d'une composition liquide comprenant une substance A sur au moins un matériau de support poreux A,
    b) application d'une composition liquide comprenant la substance B sur au moins un matériau de support poreux B,
    c) élimination au moins partielle des compositions liquides des matériaux de support poreux A et B,
    d) mélange des matériaux de support poreux A et B obtenus.

4.  Procédé selon la revendication 2 ou 3, dans lequel l'application de la composition liquide est choisie parmi l'immersion du matériau de support poreux dans la composition liquide, la submersion du matériau de support poreux dans la composition liquide ou la pulvérisation de la composition liquide sur le matériau de support poreux.

5.  Procédé selon la revendication 2, 3 ou 4, dans lequel l'application de la composition liquide comprend la création d'un vide.

6.  Procédé selon l'une des revendications 2 à 5, dans lequel l'application de la solution comprend le fait de laisser reposer le matériau de support poreux immergé dans la solution.

7.  Procédé selon l'une des revendications 2 à 6, dans lequel l'élimination au moins partielle de la solution est réalisée par filtration.

8.  Procédé selon l'une des revendications 2 à 7, comprenant en outre le séchage du matériau de support poreux après l'élimination au moins partielle de la solution.

9.  Utilisation d'un système de support poreux selon la revendication 1 destiné à réduire l'émission de formaldéhyde dans un matériau dérivé du bois.

10. Matériau dérivé du bois, comprenant un système de support poreux destiné à réduire l'émission de formaldéhyde selon la revendication 1.

**11.** Procédé de fabrication d'un matériau dérivé du bois selon la revendication 10, comprenant les étapes suivantes :

a) fourniture d'un matériau lignocellulosique sous forme de particules de bois ;
b) collage du matériau lignocellulosique à l'aide d'une composition comprenant au moins une résine aminoplaste,
c) pressage pour former un matériau dérivé du bois,

**caractérisé en ce qu'**un système de support poreux selon la revendication 1 est ajouté avant, pendant et/ou après au moins l'une des étapes a) ou b).

**IN DER BESCHREIBUNG AUFGEFÜHRTE DOKUMENTE**

**In der Beschreibung aufgeführte Patentdokumente**

- DE 1653167 A1
- EP 0341569 A2
- DE 20313424 U1
- DE 102007038041 A1


**In der Beschreibung aufgeführte Nicht-Patentliteratur**

- Römpps Chemie-Lexikon. Frankh'sche Verlagshandlung, 1973, 1893
- Ullmanns Enzyklopädie der technischen Chemie. vol. 7, 403ff
- **FUNK, M. et al.** *Wood Material Science & Engineering,* 2015, 1-6